# EUROPEAN PATENT APPLICATION

(11) **EP 2 587 661 A1**
(43) Date of publication of application: **01.05.2013**
(21) Application number: 11186290.0
(22) Date of filing: 24.10.2011
(51) Int. Cl.: H02P 1/50, H02P 25/02

(54) **System and method for controlling a synchronous motor**

(71) Applicant: ABB Technology AG, 8050 Zürich (CH); Liu, Yujing, Västeras (SE); Zhang, Hongyang, 72346 Västeras (SE); Savinovic, Djordje, 72337 Västeras (SE)
(72) Inventor: ABB Technology AG, 8050 Zürich (CH); Liu, Yujing, Västeras (SE); Zhang, Hongyang, 72346 Västeras (SE); Savinovic, Djordje, 72337 Västeras (SE)
(74) Representative: Savela, Reino Aleksi

(57) **Abstract**

A system (11) for controlling a synchronous motor during a starting period is provided, wherein the synchronous motor has a stator with a at least one AC winding (12) and a rotor with at least one DC field winding (13), and the AC winding of the stator is energized with AC during the starting period. The system comprises at least one field discharge resistor (R), connecting circuitry (14) electrically connecting the DC field winding and the field discharge resistor in a closed circuit, and by-passing circuitry (15) comprising at least two unidirectional switching devices (T3, T4) or a bidirectional switching device and being capable of electrically bidirectionally by-passing the field discharge resistor at any time in the starting period.

## Description

### TECHNICAL FIELD

The present invention generally relates to control of a synchronous motor during a starting period, wherein the synchronous motor has a stator with at least one AC winding energized with AC during the starting period and a rotor with at least one DC field winding.

The invention is particularly, but not exclusively, suited for high power synchronous motors, e.g. having a power of 5-50 MW.

### DESCRIPTION OF RELATED ART AND BACKGROUND OF THE INVENTION

Synchronous motors are normally started by the induction motor action of the damper winding or the solid poles, the field winding being unexcited during starting. The damper winding or the solid poles acts as a squirrel-cage rotor winding, and the motor is accelerated by the induction motor torque thus produced until it reaches a speed close enough to synchronism for the field winding to be excited with direct current at the proper instant, and the motor then pulls into step. During the starting period when the motor is running at subsynchronous speed, a relatively high voltage is induced in the field winding since it is rotating at a lower speed than the rotating field from the stator winding. In order to limit this voltage and protect the insulation of the field windings, thyristors are introduced to close the field windings. A high current will flow through the field windings. This current will negatively influence the starting torque. Therefore a field discharging resistor is used in order to limit this current.

Control systems of the above kind are thoroughly known in the art, see e.g. EP 1 071 192 B1; US 3,354,368; US 3,959,702; US 4,038,589; and US 4,422,028.

### SUMMARY OF THE INVENTION

In the conventional practice, this starting resistor has been separately mounted either on the rotor of the machine itself or, in some cases, externally of the motor. In either case, the starting resistors used heretofore have been relatively large, heavy, and expensive since a lot of thermal energy is dissipated. The power of a typical rotating resistor may be 1 MW for a 20 MW motor, and even though the in-duty time is short, e.g. 10-20 seconds, large amount of thermal energy is dissipated. A certain weight of the resistance material is therefore required to avoid the overheating of the resistor since the cooling time is too short to transfer away the heat from the resistor.

Further, the necessary mounting provisions and space requirements have complicated the mechanical design, especially where the resistor was mounted on the rotor. This has been a particular disadvantage in the case of brushless synchronous motors, where the excitation system and starting control are carried entirely on the rotor, and the necessity for also mounting the starting resistor on the rotor has involved considerable difficulty and has resulted in rotors of large size and high cost.

Accordingly, it is an object of the present invention to provide a system and a method for controlling a synchronous motor, which address the above issues.

It is a further object of the invention to provide such system and a method, which are simple, robust, and reliable.

These objects among others are, according to the present invention attained by systems and methods for controlling a synchronous motor as claimed in the appended patent claims.

According to one aspect of the invention there is provided a system for controlling a synchronous motor during a starting period, wherein the synchronous motor has a stator with at least one AC winding and a rotor with at least one DC field winding, and the AC winding of the stator is energized with AC during the starting period. The system comprises at least one field discharge resistor, connecting circuitry electrically connecting the DC field winding and the field discharge resistor in a closed circuit, and by-passing circuitry comprising at least two unidirectional switching devices or a bidirectional switching device and being capable of electrically bidirectionally by-passing the at least one field discharge resistor at any time in the starting period.

Preferably, the by-passing circuitry is provided for activating and/or deactivating the electrical bidirectional by-passing of the at least one field discharge resistor in response to the speed of the rotor of the synchronous motor. By activating the by-passing is here meant to by-pass the field discharge resistor and by deactivating the by-passing is meant to open the by-passing circuitry and to thereby force current to pass through the field discharge resistor.

In one embodiment, the by-passing circuitry is provided for keeping the electrical bidirectional by-passing of the field discharge resistor activated during a first part of the starting period, and for keeping the electrical bidirectional by-passing of the field discharge resistor deactivating during a second immediately following part of the starting period. Preferably, the second part of the starting period begins when the speed of the rotor of the synchronous motor is preferably at least about 70 %, more preferably at least about 80 %, more preferably at least about 85 %, and most preferably about 90 %, of the synchronous speed of the motor.

In another embodiment, the by-passing circuitry is provided for keeping the electrical bidirectional by-passing of the field discharge resistor activated during a first part of the starting period, and for keeping the electrical bidirectional by-passing of the discharge resistor deactivated during a second immediately following part of the starting period.

By using the resistor only partially during the starting period, the duty time of the starting resistor can be reduced by a factor 3-10. The size and the weight of the resistor will then be reduced by the same factor since the weight of the resistor is proportional to the duty time if the resistor cooling is assumed to the adiabatic condition.

According to another aspect of the invention a method for controlling a synchronous motor during a starting period is provided, wherein the synchronous motor has a stator with at least one AC winding energized with AC during the starting period and a rotor with a DC field winding. According to the method the DC field winding and at least one field discharge resistor is electrically connected in a closed circuit, wherein the at least one field discharge resistor is electrically unidirectionally or bidirectionally by-passed during selected parts of the starting period.

One advantage of the invention is that the size and weight of the field discharge resistor can be heavily reduced, which in turn reduces material costs and facilitates mechanical design.

A further advantage of the invention is that in for instance compressor applications, higher starting torque can increase the customer value by reducing the requirements on the compressors.

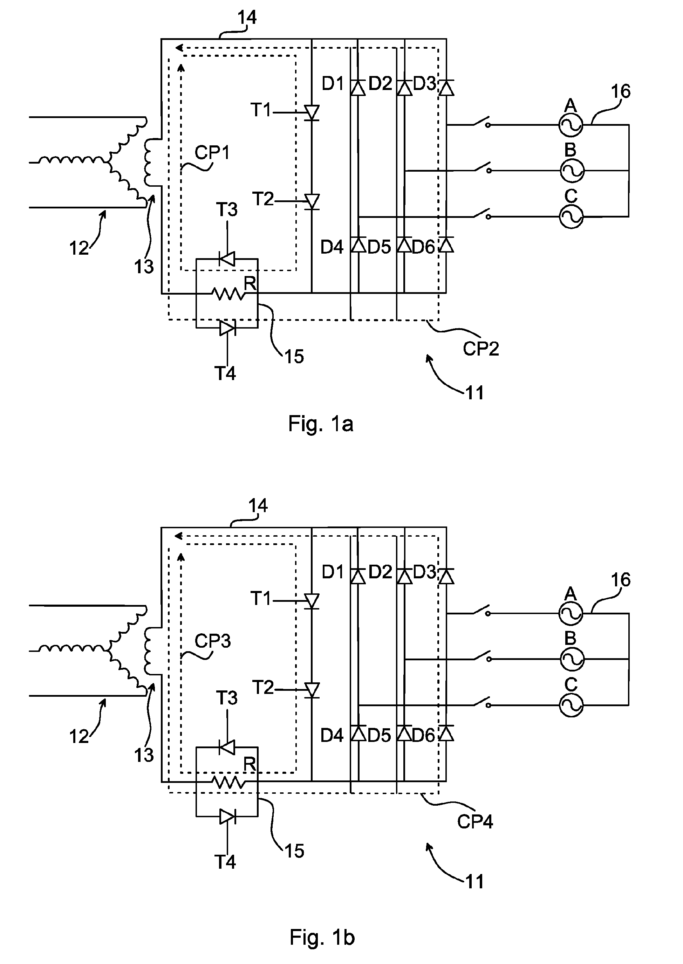

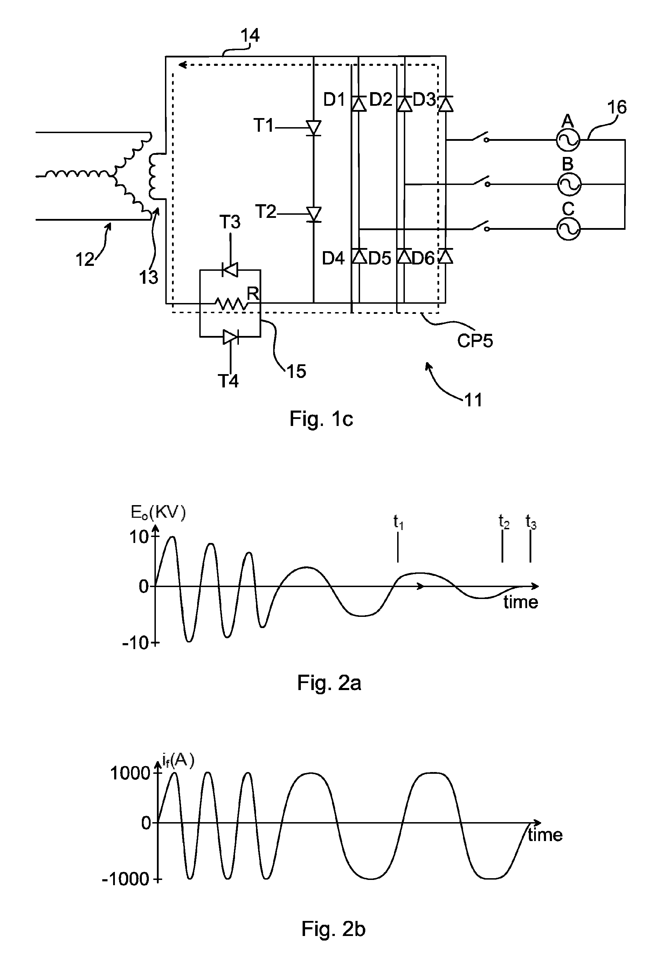

Further characteristics of the invention, and advantages thereof, will be evident from the following detailed description of preferred embodiments of the present invention given hereinafter and the accompanying Figs. 1-4, which are given by way of illustration only, and are thus not limitative of the present invention.

### BRIEF DESCRIPTION OF THE DRAWINGS

Figs. 1a-c display in a circuit diagram a system for controlling a synchronous motor during different parts of a starting period according to one embodiment of the invention.
Figs. 2a-b are oscillograms showing the starting performance of a synchronous motor.
Figs. 3a-d are on-off patterns for different thyristors of a system for controlling a synchronous motor according to the invention.
Figs. 4a-b display in circuit diagrams systems for controlling a synchronous motor according to alternative embodiments of the invention.

### DETAILED DESCRIPTION OF EMBODIMENTS

Starting performance of a large synchronous machine having a power e.g. in the interval of 5-50 MW has become a main criterion in competition for compressor applications. In order to increase the starting torque significantly, a starting or field discharge resistor is required.

Instead of connecting the field discharge resistor under the whole, or almost the whole, starting period (speed: 0 to 95-100 % of the synchronous speed of the motor), and then switching off the field discharge resistor from the field circuit during normal operation, the inventors propose a new solution, according to which the field discharge resistor is only connected at a higher speed period (speed: e.g. about 85-95 % of the synchronous speed of the motor). By such solution, the duty time of the field discharge resistor can be reduced by factor of about 3-10. The size and the weight of the resistor will be reduced in the similar proportion. Only one additional thyristor and its special firing unit is needed as compared with prior art, which will be detailed below.

Figs. 1a-c display in a circuit diagram a system for controlling a synchronous motor during different parts of a starting period according to one embodiment of the invention.

The control system 11 is provided for controlling a synchronous motor during a starting period. The synchronous motor has a stator with at least one AC winding 12 and a rotor with at least one DC field winding 13, wherein the AC winding 12 of the stator is energized with AC during the starting period. The circuit 11 comprises a field discharge resistor R and connecting circuitry 14 electrically connecting the DC field winding 13 and the field discharge resistor R in a closed circuit.

It shall be appreciated that in alternative versions of the invention, the field discharge resistor R may be exchanged for a number of resistors connected to one another in a resistor network.

The connecting circuitry 14 comprises a free-wheeling diode bridge consisting of six diodes D1-D6 that allow current to flow in a first direction, and a unidirectional switch consisting of two thyristors or SCR's T1 and T2 connected in series with one another and connected in parallel with the diode bridge to allow current to flow in a second direction opposite to the first direction when the thyristors are fired. The diode bridge and the unidirectional switch are each connected in series with the field discharge resistor R and the DC field winding 13.

Further, the control system 11 comprises by-passing circuitry 15 consisting of two oppositely directed thyristors T3, T4 connected in parallel with the field discharge resistor R. By means of the thyristors T3 and T4 it can be selected whether current is forced to pass through the field discharge resistor R (none of the thyristors T3 and T4 are fired) or whether the field discharge resistor R is electrically by-passed in either (one of the thyristors T3 and T4 is fired) or both directions (both of the thyristors T3 and T4 are fired). Each of the thyristors T1-T4 is connected to a firing unit (not illustrated) for the control of the firing thereof.

It shall be appreciated that the thyristors of the illustrated embodiment may be exchanged for other kind of unidirectional electrical switches, such as e.g. IGBTs or other kind of switches such as mechanical switches.

Further, there is provided an exciter 16 arranged for energizing the DC field winding 13 of the synchronous motor after the starting period of the synchronous motor has ended (and optionally in the end of the starting period).

The operation of the control system 11 for controlling the synchronous motor during a starting period is described with reference to Figs. 1a-c, which illustrate the operation in a first, a second, and a third part of the starting period, in conjunction with Figs. 2a-b, which are oscillograms showing the starting performance of a synchronous motor. Fig. 2a shows the open circuit voltage Eₒ across the DC field winding 13 and Fig. 2b shows the current if through the DC field winding 13 during the starting period.

During the asynchronous start, as can be seen in Fig. 2a, the induced voltage across the DC field winding 13 is an AC voltage with the oscillating frequency equal to the slip frequency and the amplitude decreases with the rotor speed increase. As shown in Fig. 1a, in the negative half cycle of the voltage, the thyristors T1 and T2 are triggered based on the pre-set voltage which is usually much lower than the maximum induced voltage. The conduction of the thyristor T3 is controlled by a frequency dependent circuit. The obtained field current flow path is denoted by CP1; current passes through the thyristors T1, T2, and T3 and the DC field winding 13.

During the positive half cycle of the induced voltage, the field current flows through the thyristor T4 (controlled as thyristor T3), the free-wheeling diode bridge D1-D6, and the DC field winding 13. The field current flow path is denoted by CP2.

When the rotor is approaching a particular speed, the frequency of the voltage drops below a pre-set value, and the thyristors T3 and T4 are not triggered any more. The field discharge resistor R is thus switched into duty firstly when the second part of the starting period begins in a later part of the starting period. One purpose of introducing the field discharge resistor R is to lift the starting torque in the end of the starting to handle a heavy load condition.

The field current flows in a current path CP3 through the thyristors T1 and T2, the field discharge resistor R, and the DC field winding 13 in the negative half cycle and in a current path CP4 through the free-wheeling diode bridge D1-D6, the field discharge resistor R, and the DC field winding 13 in the positive half cycle, see Fig. 1b.

As illustrated in Fig. 1c, when the third part of the starting period begins, the thyristors T1 and T2 are blocked when the field voltage drops below a pre-set voltage, which is in order to cut off a path prepared for the dc excitation. Further, the thyristor T4 will still be blocked. At this state, the control system 11 only provides a current path CP5 for the current flowing in the positive half cycle. The current flows through the field discharge resistor R, the free-wheeling diodes D1-D6, and the DC field winding 13. In the negative half cycle the current is blocked.

It shall be appreciated that in an alternative embodiment, the thyristor T4 is triggered to conduct during the third part of the starting period, thus by-passing the field discharge resistor R during this part. The current then flows through the thyristor T4, the free-wheeling diodes D1-D6, and the DC field winding 13. In the negative half cycle the current is blocked.

In a fourth part of the starting period, after the synchronous motor is pushed into the synchronization, the dc excitation from the exciter 16 is switched to the DC field winding 13 through the diode bridge D1-D6 to provide a constant synchronizing torque for the steady-state operating. The thyristor T4 is triggered to conduct by the dc voltage, and the field discharge resistor R is bypassed. This may be performed at a certain time delay after the third part of the starting period has ended.

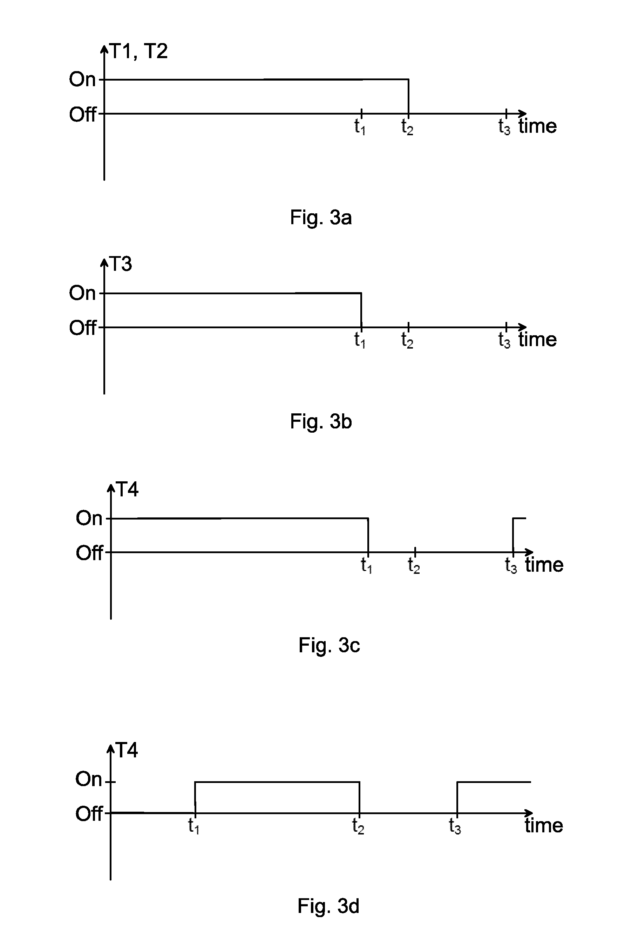

Figs. 3a-c illustrate exemplary on-off patterns for the thyristors T1-T4. The first part of the starting period begins at 0 and ends at t₁, the second part of the starting period begins at t₁ and ends at t₂, the third part of the starting period begins at t₂ and ends at t₃, and the fourth part begins at t₃. The time instants t₁-t₃ are also indicated in the oscillograms of Fig. 2a.

It shall further be appreciated that in an alternative embodiment, the thyristor T4 is blocked during the forth part of the starting period, and instead a further thyristor (not illustrated) connected in parallel with the thyristor T4 is triggered to conduct, thus bypassing the field discharge resistor R. This alteration requires one further thyristor but will not affect the overall performance of the system.

It shall yet further be appreciated that the thyristors T3 and T4 (and optionally the thyristor connected in parallel with thyristor T4) can be triggered in a plurality of manners (not only by frequency) as long as the conducting and non-conducting states can be controlled as indicated in Fig. 3c and described above.

The second part of the starting period may begin when the speed of the rotor of the synchronous motor is at least about 50 %, preferably at least about 70 %, more preferably at least about 80 %, more preferably at least about 85 %, and most preferably about 90 %, of the synchronous speed of the motor.

The second part of the starting period may end when the speed of the rotor of the synchronous motor is at least about 90 %, preferably at least about 95 %, of the synchronous speed of the motor.

The third part of the starting period may end when the speed of the rotor of the synchronous motor is at least about 90 %, preferably at least about 95 % of the synchronous speed of the motor, but after the second part of the starting period ends. The third part of the starting period may end at a given time delay after the second part of the starting period has ended (and the third part has begun).

In an alternative embodiment the thyristors T3 and T4 are triggered as illustrated in Fig. 3d. Here, the thyristors T3 and T4 are blocked during the first and third parts of the starting period and are triggered to conduct during the second and fourth parts of the starting period. Actually, the thyristor T3 does not have to be triggered to conduct during the fourth period since the thyristors T1 and T2 are blocked and prevents efficiently current from flowing in the negative half cycle of the induced voltage. Hereby, current is forced to flow through the field discharge resistor R in the first and third parts of the starting period. Note that in this embodiment the various parts of the starting period may begin and end at other points of time than in previous embodiments.

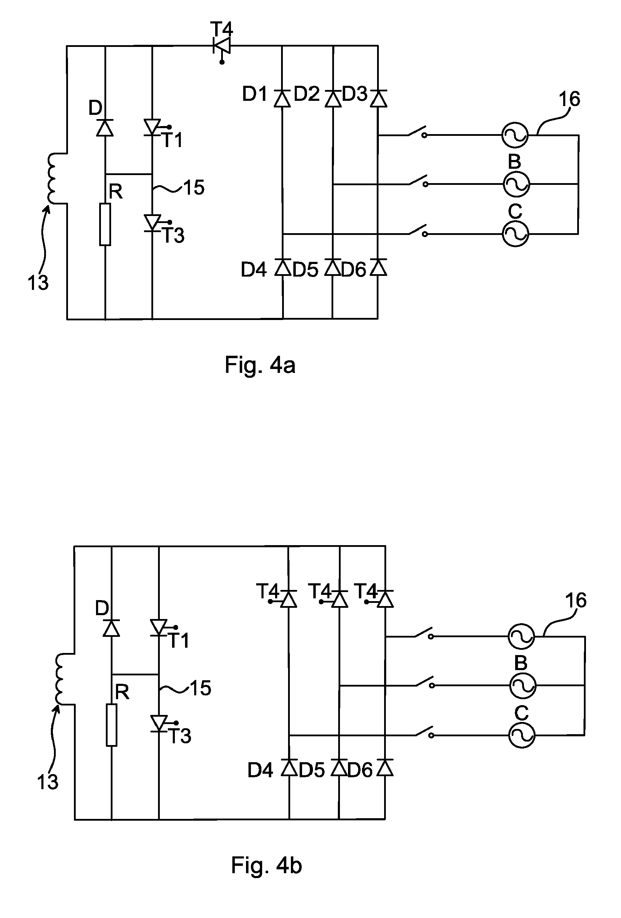

Figs. 4a-b display in circuit diagrams systems for controlling a synchronous motor according to alternative embodiments of the invention.

The system of Fig. 4a introduces the principles of the present invention into a control system as disclosed in US 3,959,702, the contents of which being hereby incorporated by reference. Here, the thyristors T1, T3, T4 are triggered as being illustrated in Fig. 3a-c. In the first part one current path is provided for allowing current to flow through the diode bridge D1-D6, the thyristor T4, and the DC field winding 13, and an oppositely directed flow path is provided for allowing current to flow through the thyristors T1 and T3 and the DC field winding 13.

In the second part thyristors T3 and T4 are blocked and one current path is provided for allowing current to flow through the field discharge resistor R, a diode D, and the DC field winding 13, and an oppositely directed flow path is provided for allowing current to flow through the thyristor T1, the field discharge resistor R, and the DC field winding 13.

In the third part the thyristor T1 is blocked and the thyristor T4 may be triggered to conduct or be blocked. In the former case, a current path is provided for allowing current to flow through the diode bridge D1-D6, the thyristor T4, and the DC field winding 13. In the opposite direction the diode D and the thyristor T1 is blocking the current. In the latter case, a current path is provided for allowing current to flow through the field discharge resistor R, the diode D, and the DC field winding 13. In the opposite direction the thyristor T4 and the thyristor T1 are blocking the current.

In the fourth part the dc excitation from the exciter 16 is switched to the DC field winding 13 through the diode bridge D1-D6 to provide a constant synchronizing torque for the steady-state operating. The thyristor T4 is triggered to conduct by the dc voltage and the field discharge resistor R is bypassed. This may, as before, be performed at a certain time delay after the third part of the starting period has ended.

The system of Fig. 4b introduces the principles of the present invention into a control system as disclosed in US 3,354,368, the contents of which being hereby incorporated by reference. This embodiment differs from the embodiment of Fig. 4a only in that the thyristor T4 and the upper diodes D1-D3 of the diode bridge are exchanged for three thyristors T4 (triggered as thyristor T4 of Fig. 4a). This embodiment will operate similar to the embodiment of fig. 4a.

In yet alternative embodiments of the invention the thyristors T3 and T4 of Fig. 1a-c are exchanged for a bidirectional switching device, such as e.g. a TRIAC, the operation of which would correspond to the operation of the thyristors T3 and T4.

The method for controlling a synchronous motor according to the present invention can be implemented with a still further embodiment of the invention wherein the thyristor T3 of Fig. 1a-c would be dispensed with and the bypassing of the field discharge resistor R is made in one current direction only. In such instance, the field discharge resistor R would be electrically unidirectionally by-passed during selected parts of the starting period. In an early part of the starting period (when current in both directions are enabled by means of the thyristors T1 and T2), the unidirectional by-passing would imply that the current during the negative half cycle of the voltage, would flow through the field discharge resistor R whereas the current during the positive half cycle of the voltage, would flow through the thyristor T4 if the by-passing is activated and flow through the field discharge resistor R if the by-passing is deactivated. In a late part of the starting period (when current in one direction is disabled by means of the thyristors T1 and T2), current will only flow during the positive half cycle of the voltage: through the thyristor T4 if the by-passing is activated and through the field discharge resistor R if the by-passing is deactivated.

At least the following advantages are obtained by the present invention.
- A cost-effective design with low weight and low losses in the field discharge resistor.
- Easy implementation without major modification of the existing rotor structure.
- Significantly better than solutions with a field discharge resistor switched in during the entire, or almost entire, starting period.

It shall be appreciated by the skilled person that various alternatives, versions, and embodiments of the invention as disclosed herein may be combined to form yet further alternatives, versions, and embodiments of the invention. In general, the number of parts of the starting period may be two or more to enable the by-passing circuitry 15 to by-pass the field discharge resistor R during a portion of the starting period. That is, the field discharge resistor R is switched into operation during a portion of the starting period and is thus only used therein partially— either in an early part of the starting period or in a later part of the staring period, or both, and either in one current direction or in both. The field discharge resistor R may be switched in and/or out a plurality of times during the starting period.

## Claims

1. A system (11) for controlling a synchronous motor during a starting period, the synchronous motor having a stator with at least one AC winding and a rotor with at least one DC field winding, wherein the AC winding of the stator is energized with AC during the starting period, comprising:
- at least one field discharge resistor (R); and
- connecting circuitry (14) electrically connecting said DC field winding and said field discharge resistor in a closed circuit, **characterized in that** the system comprises
- by-passing circuitry (15) comprising at least two unidirectional switching devices (T3, T4) or a bidirectional switching device and being capable of electrically bidirectionally by-passing said at least one field discharge resistor at any time in the starting period.

2. The system of claim 1 wherein said by-passing circuitry is provided for activating and/or deactivating the electrical bidirectional by-passing of said at least one field discharge resistor in response to the speed of the rotor of the synchronous motor.

3. The system of claim 1 or 2 wherein said by-passing circuitry is provided for keeping the electrical bidirectional by-passing of said at least one field discharge resistor activated during a first part of the starting period; and provided for keeping the electrical bidirectional by-passing of said at least one field discharge resistor deactivated during a second immediately following part of the starting period.

4. The system of claim 3 wherein said second part of the starting period begins in a later part of the starting period.

5. The system of claim 3 or 4 wherein said second part of the starting period begins when the speed of the rotor of the synchronous motor is at least about 50 %, preferably at least about 70 %, more preferably at least about 80 %, more preferably at least about 85 %, and most preferably about 90 %, of the synchronous speed of the motor.

6. The system of any of claims 3-5 wherein said by-passing circuitry is provided for keeping the electrical bidirectional by-passing of said at least one field discharge resistor deactivated during a third, preferably final, part of the starting period following immediately after the second part of the starting period.

7. The system of claim 6 wherein said connecting circuitry is provided for allowing current to flow only unidirectionally in said closed circuit and through said at least one field discharge resistor during the third, preferably final, part of the starting period

8. The system of any of claims 3-5 wherein said by-passing circuitry is provided for keeping an electrical unidirectional by-passing of said at least one field discharge resistor activated during a third, preferably final, part of the starting period following immediately after the second part of the starting period.

9. The system of any of claims 3-8 wherein said second part of the starting period ends when the speed of the rotor of the synchronous motor is at least about 90 %, and preferably at least about 95 % of the synchronous speed of the motor.

10. The system of claim 1 or 2 wherein said by-passing circuitry is provided for keeping the electrical bidirectional by-passing of said at least one field discharge resistor deactivated during a first part of the starting period; and provided for keeping the electrical bidirectional by-passing of said at least one field discharge resistor activated during a second immediately following part of the starting period.

11. The system of claim 10 wherein said second part of the starting period begins in an earlier part of the starting period.

12. The system of claim 10 or 11 wherein said by-passing circuitry is provided for keeping the electrical bidirectional by-passing of said at least one field discharge resistor deactivated during a third part of the starting period following immediately after the second part of the starting period.

13. The system of any of claims 1-12 comprising
- an exciter (16) provided for energizing the DC field winding after the starting period of the synchronous motor has ended, wherein
- said connecting circuitry is provided for allowing current to flow to said DC field winding only unidirectionally after the starting period of the synchronous motor has ended; and
- said by-passing circuitry is provided for keeping the electrical bidirectional by-passing of said at least one field discharge resistor activated or for keeping an electrical unidirectional by-passing of said at least one field discharge resistor activated after the starting period of the synchronous motor has ended.

14. The system of any of claims 1-13 wherein said connecting circuitry comprises a diode bridge (D1-D6) and at least one unidirectional switch, preferably a thyristor (T1, T2), connected in parallel with the diode bridge wherein the diode bridge and the at least one unidirectional switch are provided for allowing current to flow in opposite directions.

15. The system of any of claims 1-14 wherein said at least two electrical switching devices comprises at least two unidirectional switches (T3-T4), preferably thyristors or IGBT's, connected in parallel with the field discharge resistor, wherein the two unidirectional switches are arrangable to allow current to flow in opposite directions.

16. A method for controlling a synchronous motor during a starting period, the synchronous motor having a stator with a at least one AC winding (12) and a rotor with at least one DC field winding (13), wherein the AC winding of the stator is energized with AC during the starting period, **characterized by** the steps of:
- electrically connecting said DC field winding and at least one field discharge resistor (R) in a closed circuit; and
- electrically unidirectionally or bidirectionally by-passing said at least one field discharge resistor during selected parts of the starting period.

17. The method of claim 16 wherein the electrical bidirectional by-passing of said at least one field discharge resistor is activated and/or deactivated in response to the speed of the rotor of the synchronous motor.

18. The method of claim 16 wherein the selected parts of the starting period comprise a period where the speed of the rotor of the synchronous motor is less than 90 % of the synchronous speed of the motor, such as less than 80 %, less than 70 % or less than 50 % of the synchronous speed of the motor.
